# EUROPÄISCHE PATENTSCHRIFT

(11) **EP 1 194 740 B1**
(45) Veröffentlichungstag und Bekanntmachung des Hinweises auf die Patenterteilung: **16.10.2002**
(21) Anmeldenummer: 00952915.7
(22) Anmeldetag: 10.07.2000
(51) Int. Cl.: G01D 5/24, H03K 17/955, G01V 3/08

(54) **ELEKTRISCHER SENSOR ZUR MESSUNG EINER KAPAZITÄTSÄNDERUNG UND UMSETZUNG IN EIN SPANNUNGSSIGNAL**
ELECTRICAL SENSOR FOR MEASURING CAPACITANCE CHANGE AND CONVERSION INTO A VOLTAGE SIGNAL
CAPTEUR ELECTRIQUE PERMETTANT LA MESURE D'UN CHANGEMENT DE CAPACITE ET LA CONVERSION EN UN SIGNAL DE TENSION

(30) Priorität: 13.07.1999 DE 19932162
(43) Veröffentlichungstag der Anmeldung: 10.04.2002
(73) Patentinhaber: Indihar, Maximilian, 68219 Mannheim (DE)
(72) Erfinder: Indihar, Maximilian, 68219 Mannheim (DE)
(74) Vertreter: Mierswa, Klaus
(86) Internationale Anmeldenummer: DE0002249
(87) Internationale Veröffentlichungsnummer: WO01004578

(56) Entgegenhaltungen:
- EP-A- 0 344 942
- EP-A- 0 564 164
- DE-A- 4 006 119

## Beschreibung

### Technisches Gebiet:

Die Erfindung betrifft einen elektrischen Sensor zur Messung einer Kapazitätsänderung eines Kondensators und Umsetzung in ein der Kapazitätsänderung entsprechendes Spannungssignal, welches auf eine Anzeige- oder Meßeinrichtung aufgegeben und ausgewertet wird, unter Verwendung eines Transformators mit zwei bifilar gewickelten Spulen auf einem Kern, wobei an den Eingang der Primärspule ein Signalgeber angeschlossen ist, insbesondere zur Meldung einer Distanzänderung eines zu detektierenden oder zu überwachenden Objektes oder zur Meldung der Bewegung zweier sich relativ bewegender Objekte, gemäß dem Oberbegriff des Anspruchs 1 sowie dessen Verwendung gemäß Anspruch 12.

### Stand der Technik:

Es ist eine Reihe von auf kapazitiver oder induktiver Basis arbeitenden elektrischen Sensoren bekannt, die gewöhnlich einen kontakt- und berührungslos arbeitenden Initiator enthalten, der einen Hf-Oszillator in einer Sperrschwingerschaltung mit einem aktiven LC- oder RC-Schwingkreis aufweist. Handelt es sich um einen LC-Initiator, so ist die Induktivität des LC-Schwingkreises als Spule mit gerichtetem Hf-Feld ausgebildet. Wird in das Feld ein elektrisch leitendes Medium gebracht, tritt eine Dämpfung im Schwingkreis auf. Bei genügend großer Dämpfung gemäß dem Abstand des Mediums von der Spule des LC-Schwingkreises reißt die Schwingung des Oszillators ab, wobei diese Zustandsänderung innerhalb eines Auswerters in einen Schaltbefehl umgesetzt wird. Handelt es sich um einen RC-Initiator, so ist die Sensorelektrode Teil des Kondensators des RC-Schwingkreises, dessen Kapazität sich bei der Annäherung eines Objektes mit hinreichend großer Dielektrizitätszahl an die Sensorelektrode zu ändern imstande ist, wodurch der RC-Schwingkreis zu Schwingungen angeregt wird oder die Schwingungen abreißen und die Änderung der Schwingungsamplitude in einem nach-geschalteten Hüllkurvendemodulator ausgewertet werden können. Schalter mit derartigen Sensoren besitzen die Eigenschaft, daß der Schaltabstand von den Materialeigenschaften und der Beschaffenheit des zu detektierenden Körpers abhängt. Somit bewirkt die Veränderung der Kapazität einer aktiven Fläche eine Veränderung der Frequenz, die ausgewertet werden kann.

Durch die EP 0 344 942 B1 ist eine transformatorgekoppelte Kapazitätsmeßanordnung mit einer Elektrode (dort Figur 8) bekannt geworden, die eine direkte Messung von Kapazitäten gegen Erde erlaubt unter Verwendung eines bifilaren Transformators, wobei an den Eingang der Primärspule ein Oszillator mit konstant gesteuerter Amplitude gelegt ist. Die Ausgänge der Primär- und der Sekundärspule sind mit einer virtuelle Erde verbunden, so dass sich die Eingänge der Spulen im Gleichklang bewegen. Der Eingang der Sekundärspule ist an eine Elektrode gelegt, über der sich eine Abschirmung befindet. Durch die Stabilisierung der Amplitude des Oszillators wird erreicht, das immer ein konstanter Verschiebungsstrom von der Elektrode zur Erde fließt. Der sich dann in der Sekundärspule einstellende und in die virtuelle Erde fließende Strom ist ein Maß für die Entfernung h der Elektrode von der Erde, da die Impedanz der Elektrode zur Erde proportional zur Entfernung h ist.

Durch die DE 34 08 261 A1 ist ein Annäherungsschalter bekannt geworden, bei der eine Langzeit-Mittelwertbildung des Empfängersignals stattfindet. Der Annäherungsschalter besitzt einen Sender und einen Empfänger zum Empfang der vom Sender ausgesandten und von einem Objekt reflektierten Strahlung. Ein Langzeit-Mittelwertbildner bildet einen Langzeitmittelwert des Empfangssignals, welches mit einem Komparatorsignal verglichen wird. Das Komparatorsignal ist ein Kurzzeitsignal, welches den momentanen Wert des Empfangssignals repräsentiert, mit dem Langzeitsignal vergleicht, wobei dann ein Komparatorsignal abgegeben wird, wenn die Abweichung des Kurzzeitsignals vom Langzeitsignal einen bestimmten Betrag überschreitet. Innerhalb eines Sperrkreises wird die Neubildung eines Langzeitmittelwertes durch den Langzeitmittelwertbildner während derjenigen Zeit unterbunden, in der ein Ausgangssignal des Komparators vorliegt, welches zur Bildung des Ausgangssignals der Schaltanordnung verwendet wird.

Durch die DE 44 33 677.2 ist des Weiteren ein Verfahren zur Überwachung eines sich bewegenden Mediums bekannt geworden, insbesondere Messung des Füllstandes in einem Behälter oder Distanzmeldung eines zu detektierenden Objektes, unter Verwendung eines kapazitiven elektrischen Sensors, der auf eine Ladungspumpe folgt in einer Rückkopplungsschleife und der einen Schmitt-Trigger und einen Komparator umfaßt, auf deren ein Eingang jeweils das Ausgangssignal des Sensors gelegt ist. Der Ausgang des Komparators bildet die Rückkopplungsschleife, in die nach einer Versorgungsspannungs- oder -stromquelle die Schaltstrecke eines Schalters gelegt ist, der vom Ausgang des Schmitt-Triggers angesteuert wird, wobei das Ausgangssignal ebenfalls am Ausgang des Schmitt-Triggers abgenommen wird.

Derartige Sensoren weisen generell den Nachteil auf, daß aufgrund der Temperaturabhängigkeit des Sensors keine gleichbleibende Empfindlichkeit gewährleistet ist. Dadurch kann bei einer einmal durchgeführten Justage des Sensors ein Verlassen des Schaltabstandes erfolgen oder es kann ein Anschwingen des Oszillators erfolgen, noch ehe ein Objekt oder Medium sich im Ansprechbereich befindet; dadurch ist der Schaltabstand über dem Temperaturbereich nicht konstant. Ebenso kann eine applikationsspezifische Justage des Sensors außerhalb der Spezifikationen des Sensors erforderlich sein, was schwierig zu bewerkstelligen ist. Des Weiteren zeigen derartige Sensoren eine große Richtungsabhängigkeit, was häufig nachteilig ist. Ebenso besitzen derartige Sensoren den Nachteil, dass die Kapazität der aktiven Fläche stark von der Umgebung und deren Veränderungen abhängt.

### Technische Aufgabe:

Der Erfindung liegt die Aufgabe zugrunde, einen elektrischen Sensor der genannten Gattung zu schaffen, mit dem kapazitiv sich zwei relativ zueinander bewegende Objekte geortet, insbesondere auch großflächige Objekte, und damit Objekte gegen Diebstahl, wie Bilder in einer Galerie, gesichert werden können.

### Offenbarung der Erfindung und deren Vorteile:

Die Lösung der Aufgabe besteht erfindungsgemäß in den folgenden Merkmalen:
a) an die Ausgänge der Primär- und der Sekundärspule ist je eine von zwei Kondensatorelektroden des Kondensators angeschlossen, welche zwischen sich ein elektrisches Feld ausbilden und welchen eine gemeinsame Bezugselektrode gegenüber steht, die zu jeder der Kondensatorelektroden zusätzlich jeweils ein elektrisches Streufeld ausbildet, so dass jede Kondensatorelektrode mit der Bezugselektrode je einen Streufeldkondensator ergibt,
b) der Eingang der Sekundärspule ist auf ein festes System-Bezugspotential gelegt,
c) auf dem Kern des Transformators sitzt eine Tertiärspule, an welche die Anzeige- oder Meßeinrichtung angeschlossen ist,
d) ein sich den Kondensatorelektroden und der Bezugselektrode näherndes Objekt bewirkt eine Änderung der Kapazität der Streufeldkondensatoren bezüglich der Bezugselektrode, wobei diese Kapazitätsänderung in der Tertiärspule eine Differenzspannung erzeugt, welche in der Anzeige- oder Meßeinrichtung ausgewertet wird.

Vorzugsweise ist der Signalgeber ein Oszillator oder Impulsgeber mit festem Arbeitspunkt, nämlich hinsichtlich Amplitude und/oder Frequenz und/oder Signalform, zum Beispiel Rechteckgenerator oder Burstgenerator.

Der Vorteil der Erfindung liegt darin, dass der Sensor sehr kleine Signale detektieren kann, bei denen das Störsignal um ein Mehrfaches größer als das Nutzsignal ist. Mit der Erfindung ist es möglich, noch ein Verhältnis Störsignal:Nutzsignal wie 2000:1 und besser zuverlässig zu detektieren. Bei der Verwendung eines Differenztransformators ist das Meßverfahren praktisch unabhängig von den Störungen der Umgebung, da beide Kondensatorelektroden (Ea,Eb) von Störungen gleichermaßen beaufschlagt werden; das Meßverfahren ermöglicht eine statische Detektierung der Veränderung des elektrischen Streufeldes an der aktiven Elektrode, das ist diejenige, die an den Ausgang der Primärspule angeschlossen ist zur Bezugselektrode.

Das Prinzip der Erfindung beruht darauf, dass ein fest definiertes Ausgangssignal eines Signalsgebers, beispielsweise ein Rechtecksignal eines Rechteckgenerators, in die Primärspule des Transformators bzw. des Differenztransformators eingespeist wird, wobei an das andere Ende der Primärspule eine der beiden Kondensatorelektroden eines Kondensators angeschlossen ist, die die aktive Elektrode darstellt. Die Wicklung der Sekundärspule - beide Spulen sind bifilar auf einen gemeinsamen Kern gewickelt - ist an einem Ende an die zweite Kondensatorelektrode des Kondensators angeschlossen, welche die Gegenelektrode des Kondensators darstellt; das andere Ende der Sekundärspule ist auf ein festes Bezugspotential, vorzugsweise Systemmasse, gelegt. Die beiden Kondensatorelektroden haben einen geringen und konstanten Abstand voneinander und bilden ein elektrisches Feld zwischen sich aus, beispielsweise ein Plattenkondensator. Den beiden Kondensatorelektroden steht eine dritte Elektrode als Bezugselektrode gegenüber, die vorzugsweise die Erde ist und ebenfalls eine Kondensatorelektrode darstellt. Zwischen den beiden Kondensatorelektroden und der dritten Bezugselektrode bildet sich ebenfalls je ein elektrisches Feld, nämlich ein Streufeld, aus, wobei sich das Streufeld, gebildet zwischen der aktiven Kondensatorelekrode und der Erde, bzw. diese Streufelder verändert bzw. verändern bzw. gestört werden, sobald ein Objekt in den Erfassungsbereich gerät oder sich aus diesem entfernt. Die Veränderung dieses Streufeldes bzw. dieser Streufelder bei Annäherung oder Entfernung eines Objektes - die Veränderung der beiden Streukapazitäten (Ca und Cb) bzw. die Veränderung des Verhältnisses derselben (Ca:Cb) - bewirkt eine Stromänderung im Differenztransformator, die in einer an die Tertiärspule angeschlossenen Anzeige- oder Meßeinrichtung ausgewertet werden kann. In vorteilhafter Weise dient auch nur der Differenztransformator als einziges Bauteil zur Einspeisung, Aufnahme der Kapazitätswerte und Verstärkung des Ausgangssignals.

System-Bezugspotential bzw. Systemmasse und Bezugspotential der Bezugselektrode, vorzugsweise Erde, müssen bei der Erfindung nicht gleiche Potentiale aufweisen; System-Bezugspotential bzw. Systemmasse und Bezugspotential der Bezugselektrode, wie Erde, müssen nicht identisch sein.

Aufgrund der bifilaren Wicklung der beiden bifilaren Spulen des Differenztransformators subtrahieren sich die beiden Ströme in Ruhe der Vorrichtung, so dass in der Tertiärspule keine oder nur eine geringe Differenzspannung induziert wird. Die beiden Kondensatorelektroden zusammen mit der Bezugselektrode stellen dabei den eigentlichen Kapazitätssensor dar.

Wird das Verhältnis der elektrischen Streufelder zwischen den beiden Kondensatorelektroden und der dritten Bezugselektrode verändert, beispielsweise durch ein sich den Kondensatorelektroden näherndes oder von diesen sich entfernendes Objekt, so ändern sich die Kapazitätsverhältnisse. Dabei bewirkt eine Veränderung der Kapazität der aktiven Kondensatorelektrode, die an die Primärspule angeschlossen ist, eine Veränderung des Stromes in der Primärspule. Der Strom in der Sekundärspule bleibt aber praktisch unverändert, weil das elektrische Feld zwischen den Elektroden nur unbedeutend verändert wird. Dadurch entsteht eine Änderung in den sich subtrahierenden Strömen von Primär- und Sekundärspule, welche Änderung in der Tertiärspule die Induktion einer relativ großen Differenzspannung zur Folge hat, die in einer Anzeige- und Meßeinrichtung angezeigt und ausgewertet werden kann. Diese Ausgestaltung macht die gesamte Schaltung gegenüber Umwelteinflüssen praktisch immun, da Umwelteinflüsse beide Streufelder, hin zur Bezugselektrode, gleichermaßen beaufschlagen. Das bedeutet auch, dass weder der Abstand der Kondensatorelektroden noch die Elektrodenflächen noch das Dielektrikum der Kondensatorelektroden zum Zwecke der Messung verändert werden, sondern lediglich das Streufeld durch Annäherung oder Entfernung eines Gegenstandes, der ja eine Kapazität zwischen Erde und Meßanordnung einbringt, gestört wird.

Des Weiteren kann die an die Primärspule angeschlossene Kondensatorelektrode, die aktive Elektrode, eine mit Unterbrechungen versehene, nichtvollflächige Struktur aufweisen. Dann verändert sich bei Besprühen oder Begießen mit einer Flüssigkeit die Kondensatorfläche, was wiederum eine Spannungsänderung in der Tertiärspule bewirkt. Dazu kann die an die Primärspule angeschlossene Kondensatorelektrode ein Gitter oder Netz sein oder aus zusammenhängenden Streifen bestehen.

Das Wicklungsverhältnis von Primär- zu Sekundärspule beträgt vorzugsweise 1 zu 1; das Wicklungsverhältnis von Tertiärspule zu Primär- bzw. Sekundärspule liegt bevorzugt zwischen 1 bis 2000 zu 1. Das Wicklungsverhältnis ist bevorzugt dem Größenverhältniss der Elektroden zueinander angepaßt. Die Anzeige- oder Meßeinrichtung weist ein optisches oder akustisches Anzeigeelement auf.

Die beiden Kondensatorelektroden sind als flächige Elektroden sich gegenüberliegend bzw. -stehend angeordnet und können zur Bezugselektrode in einem vorgegebenen Winkel, vorzugsweise 90 Grad, geneigt sein.

Die Vorrichtung besitzt des Weiteren den Vorteil, daß sich langsam ändernde Störgrößen, wie Temperatur, Luftfeuchte und/oder Bestaubung, sich nicht auswirken. Insbesondere weist die Vorrichtung praktisch keine Abhängigkeit von der Temperatur auf.

Insbesondere kann die Verwendung der Erfindung zum Schutz oder zur Meldung des Vorhandenseins oder Nichtvorhandenseins eines Gegenstandes, wie Bild oder Skulptur oder Fahrzeug auf einem Parkplatz, gegen Diebstahl oder Zerstörung oder Anwesenheitsmeldung dadurch gekennzeichnet sein dass die an die Primärspule angeschlossene Kondensatorelektrode hinter das Bild oder unter die Skulptur oder hinter oder unter dem Fahrzeug plaziert ist, so dass bei Annäherung einer Person oder eines Gegenstandes auf das Bild oder auf die Skulptur oder auf den Parkplatz zu und Unterschreiten eines vorgegebenen Sicherheitsabstandes die Änderung des elektrischen Feldes zwischen der Erde und der aktiven Elektrode, was durch den kapazitiven Sensor detektiert wird, eine in der Anzeige- oder Meßeinrichtung auswertbare Spannungsänderung in der Tertiärspule bewirkt wird.

Der eigentliche, kapazitive Sensor bzw. die Sicherheitseinrichtung kann dergestalt aufgebaut sein, dass im Bereich eines Fahrzeugplatzes ein Dielektrikum darstellender Träger angeordnet ist, auf der dem Fahrzeug zugewandten Seite die aktive Kondensatorelektrode Ea aufgebracht und auf der gegenüberliegenden Seite des Trägers die zweite Kondensatorelektrode Eb angeordnet ist, wobei der Tragboden für das Fahrzeug die Bezugselektrode, nämlich Erde, darstellt.

Eine Mehrzahl von kapazitiven Sensorelektroden, jeweils bestehend aus den beiden Kondensatorelektroden sowie der Bezugselektrode, können mittels eines Multiplexers angesteuert werden und sind dann nacheinander auswertbar. Dadurch werden erhebliche Kosteneinsparungen erzielt, weil nur ein Differenzübertragungsmodul des Transformators benötigt wird. Das feste System-Bezugspotential, auf welches die Tertiärspule gelegt ist, kann die Erde oder die Systemmasse sein.

Kurzbeschreibung der Zeichnung, in der zeigen:
- Figur 1: ein elektrisches Blockschaltbild der Vorrichtung mit Differenztransformator sowie Kondensator mit Bezugselektrode
- Figur 2: die Darstellung der Verhältnisse der elektrischen Felder zwischen dem Kondensator und der Bezugselektrode
- Figur 3: eine perspektivische Prinzip-Darstellung eines Gitter-Kondensators mit Bezugselektrode
- Figur 4: eine Skulptur mit der erfindungsgemäßen Vorrichtung zur Diebstahlssicherung und
- Figur 5: einen Fingerkondensator mit Bezugselektrode.

### Bevorzugte Ausführung der Erfindung:

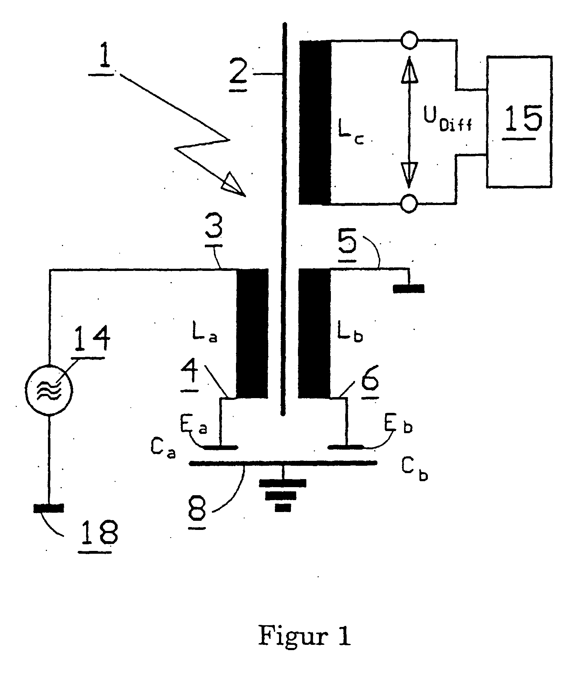

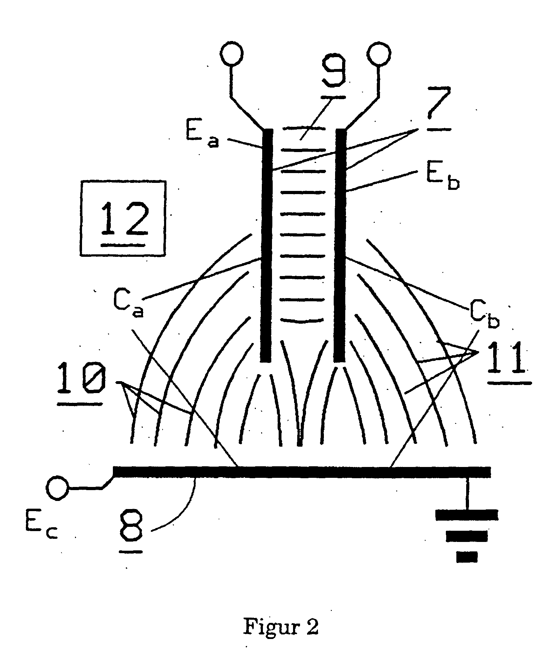

Figur 1 zeigtein elektrisches Blockschaltbild der Vorrichtung bestehend aus einem Differenztransformator 1 mit Primärspule La und Sekundärspule Lb, die bifilar gewickelt auf einem gemeinsamen Kern 2 angeordnet sind; des Weiteren ist auf dem Kern 2 eine Tertiärspule Lc angeordnet, welche von der Primär- und Sekundärspule vorzugsweise kapazitiv getrennt ist. An den Eingang 3 der Primärspule La ist ein Signalgeber 14, zum Beispiel Rechteckgenerator oder Burstgenerator, angeschlossen, der ein festes, periodisches Signal, zum Beispiel einen Rechteckimpuls, in die Primärspule La an deren Eingang 3 einspeist. An den Ausgang 4 der Primärspule La ist eine Kondensatorelektrode Ea eines Kondensators 7 angeschlossen, der aus den beiden Kondensatorelektroden Ea und Eb besteht, welche zwischen sich ein elektrisches Feld 9 ausbilden. Die Wicklung der Sekundärspule Lb ist an einem Ende 6 an die zweite Kondensatorelektrode Eb angeschlossen, welche die Gegenelektrode des Kondensators 7 darstellt. Das andere Ende 5 der Sekundärspule Lb ist auf ein festes Bezugspotential, vorzugsweise hier auf die Systemmasse 8, gelegt. Die Kondensatorelektrode Ea stellt dabei die aktive Elektrode des kapazitiven Sensors dar. Die beiden Kondensatorelektroden Ea und Eb haben einen geringen und konstanten Abstand voneinander und bilden ein elektrisches Feld 9, Figur 2, zwischen sich aus.

Den beiden Kondensatorelektroden Ea und Eb steht eine dritte Elektrode 8 als Bezugselektrode gegenüber, die vorzugsweise die Erde ist und ebenfalls eine Kondensatorelektrode darstellt. Zwischen den beiden Kondensatorelektroden Ea sowie Eb und der dritten Bezugselektrode Ec bzw.8, Erde, bildet sich deshalb ebenfalls je ein elektrisches Streufeld aus, und zwar ein Streufeld 10 zwischen der Kondensatorelektrode Ea und der Elektrode Ec bzw. 8 aufgrund der Streufeldkapazität Ca (Kondensator Ca) sowie ein Streufeld 11 zwischen der Kondensatorelektrode Eb und der Elektrode 8 bzw. Ec aufgrund der Streufeldkapazität Cb (Kondensator Cb).

Aufgrund der bifilar gewickelten Wicklungen der beiden Spulen La, Lb des Differenztransformators 1 subtrahieren sich die beiden Ströme in Ruhe der Vorrichtung, so dass in der Tertiärspule Lc keine oder nur eine sehr geringe Differenzspannung induziert wird. Die beiden Kondensatorelektroden Ea, Eb zusammen mit der Bezugselektrode 8 stellen dabei den eigentlichen kapazitätsdetektierenden Kapazitätssensor dar.

Das stärkste elektrische Feld, das Feld 9, bildet sich zwischen den Kondensatorelektroden Ea und Eb aus; dieses elektrische Feld 9 wird bei einer Störung nur unbedeutend geändert. Wird hingegen das Verhältnis der elektrischen Streufelder 10, 11 (Kondensatoren Ca, Cb) zwischen den beiden Kondensatorelektroden Ea, Eb und der dritten Bezugselektrode 8 verändert, beispielsweise durch ein sich den Kondensatorelektroden Ea, Eb näherndes oder von diesen sich entfernendes Objekt 12, so ändern sich die Kapazitätsverhältnisse. Dabei bewirkt eine Veränderung der Kapazität der an die Primärspule angeschlossenen aktiven Kondensatorelektrode Ea bezüglich der Kapazität Ca, nämlich Bezugselektrode 8-Kondensatorelektrode Ea, also eine Veränderung des elektrischen Streufeldes 10, was eine Veränderung des Stromes in der Primärspule La bewirkt. Der Strom in der Sekundärspule Lb hingegen bleibt praktisch unverändert, weil das elektrische Streufeld 11 zwischen der Kondensatorelektrode Eb und der Bezugselektrode 8 nur unbedeutend verändert wird. Dadurch entsteht eine Änderung in den sich subtrahierenden Strömen von Primär- und Sekundärspule La, Lb, welche Änderung in der Tertiärspule Lc die Induktion einer - entsprechend den Windungsverhältnissen - relativ großen Differenzspannung Udiff zur Folge hat, die in einer an die Tertiärspule Lc angeschlossenen Anzeige- und Meßeinrichtung 15 angezeigt und ausgewertet werden kann.

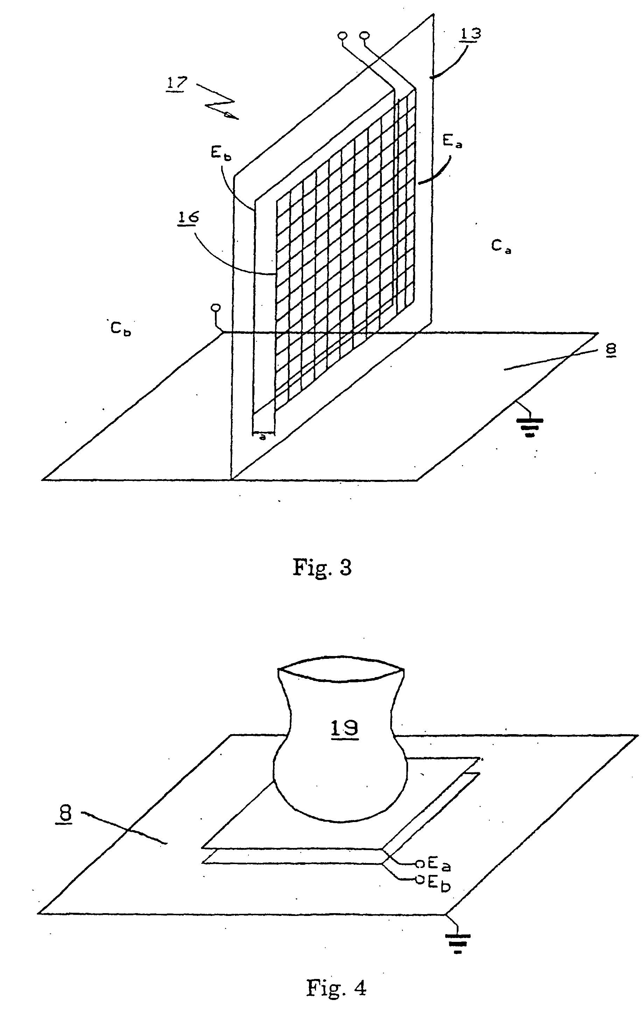

Figur 3 zeigt in perspektivischer Darstellung das Prinzip eines Gitter-Kondensators 17 mit der Bezugselektrode 8, vorzugsweise die Masse, wobei der Gitterkondensator 17 wiederum aus den beiden Kondensatorelektroden Ea und Eb besteht, zwischen welchen ein Dielektrikum 13 angeordnet ist und welche einen Abstand a voneinander aufweisen. Die Kondensatorelektrode Ea ist dabei als ein Gitter 16 ausgeführt und stellt die aktive Kondensatorelektrode Ca dar, wobei die Kondensatorelektroden Ea, Eb senkrecht zur Bezugselektrode 8 angeordnet sind. Dadurch wird ein homogenes elektrisches Feld über die gesamte Fläche des Sensors erzielt, so dass ein keulenförmiges elektrisches Feld vermieden wird, welches zur Überwachung zum Beispiel eines Bildes oder einer Skulptur nicht geeignet wäre.

Mit dieser Ausgestaltung der aktiven Elektrode Ea wird aber noch ein weiterer Vorteil erreicht, dass nämlich bei Besprühen oder Begießen des Gitters 16 mit einer Flüssigkeit sich, wie vorstehend beschrieben, die Kapazität Ca zwischen der Gitterelektrode 16 und der Bezugselektrode 8 verändert, was wiederum eine Spannungsänderung Udiff in der Tertiärspule Lc bewirkt. Diese Spannungsänderung Udiff kann dann ausgewertet werden.

Ebenso kann die an die Primärspule La angeschlossene Kondensatorelektrode Ea, die aktive Elektrode, eine mit Unterbrechungen versehene, nichtvollflächige Struktur aufweisen oder ein Gitter oder Netz 16 sein oder aus zusammenhängenden Streifen bestehen.

Figur 4 zeigt eine Skulptur 19 mit der erfindungsgemäßen Vorrichtung zur Diebstahlssicherung der Skulptur. Eine Skulptur in Form einer Vase 19 steht auf dem kapazitiven Sensor, gebildet durch die aktive Kondensatorelektrode Ea, welche durch ein Dielektrikum von der in diesem Fall darunterliegenden Kondensatorelektrode Eb getrennt ist. Dieser Kondensator 7 liegt auf der Bezugselektrode 8, die vorzugsweise die Erde 8 darstellt, auf. Auf diese Weise bildet sich ein elektrisches Streufeld um die Vase 19 herum aus, welches aus einer Überlagerung der beiden Streufelder 10 und 11 der Figur 2 besteht. Eine Veränderung dieser elektrischen Streufelder durch äußere Einflüsse, wie zum Beispiel das Berühren mit den Händen, bewirkt wiederum eine Ausgangsspannung in der Tertiärspule Lc des Differenztransformators 1.

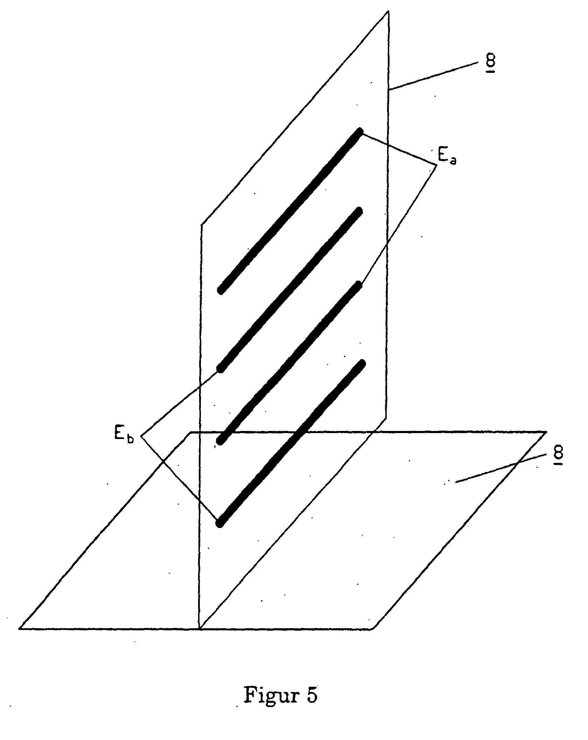

Figur 5 zeigt eine Ausgestaltung eines Fingerkondensator mit der Bezugselektrode 8. Jeweils zwischen zwei Fingern, die die Elektrode Ea darstellen, liegen zwei weitere Finger, die die Elektrode Eb darstellen.

### Gewerbliche Anwendbarkeit:

Die erfindungsgemäße Vorrichtung eignet sich zur Detektion von kleinsten bis kleinen Kapazitätsdifferenzen, die im nF bis fF-Bereich liegen können, und deren Umsetzung in eine auswertbare Spannungsänderung. Insbesondere ist die Vorrichtung zur Absicherung von Fenstern, Türen, Durchgängen, Tresoren, und Räumen allgemein geeignet sowie von Gegenständen, wie Bildern, Skulpturen und Vitrinen, gegen Entfernen oder Diebstahl oder Zerstörung. Des Weiteren kann die Erfindung zur Distanzmessung bzw. Distanzüberwachung, zur Füllstandsüberwachung, zur Überwachung der Belegung von Regalen, wie auch zur Platzbelegung mit Fahrzeugen verwendet werden. Insbesondere die Platzbelegung für Fahrzeuge in Parkhäusern ist ein wichtiges Anwendungsgebiet.

## Patentansprüche

1. Elektrischer Sensor zur Messung einer Kapazitätsänderung eines Kondensators (7) und Umsetzung in ein der Kapazitätsänderung entsprechendes Spannungssignal (Udiff), welches auf eine Anzeige- oder Meßeinrichtung (15) aufgegeben und ausgewertet wird, unter Verwendung eines Transformators (1) mit zwei bifilar gewickelten Spulen (La,Lb) auf einem Kern (2), wobei an den Eingang der Primärspule (La) ein Signalgeber (14) angeschlossen ist, insbesondere zur Meldung einer Distanzänderung eines zu detektierenden oder zu überwachenden Objektes (12,19) oder zur Meldung der Bewegung zweier sich relativ bewegender Objekte (12,19),
**gekennzeichnet durch** folgende Merkmale:
a) an die Ausgänge (4,6) der Primär- (La) und der Sekundärspule (Lb) ist je eine von zwei Kondensatorelektroden (Ea,Eb) des Kondensators (7) angeschlossen, welche zwischen sich ein elektrisches Feld (9) ausbilden und welchen eine gemeinsame Bezugselektrode (8,Ec) gegenüber steht, die zu jeder der Kondensatorelektroden (Ea,Eb) zusätzlich jeweils ein elektrisches Streufeld (10,11) ausbildet, so dass jede Kondensatorelektrode (Ea,Eb) mit der Bezugselektrode (8,Ec) je einen Streufeldkondensator (Ca,Cb) ergibt,
b) der Eingang (5) der Sekundärspule (Lb) ist auf ein festes System-Bezugspotential (8) gelegt,
c) auf dem Kern (2) des Transformators (1) sitzt eine Tertiärspule (Lc), an welche die Anzeige- oder Meßeinrichtung (15) angeschlossen ist,
d) ein sich den Kondensatorelektroden (Ea,Eb) und der Bezugselektrode (8,Ec) näherndes oder entfernendes Objekt (12,19) bewirkt eine Änderung der Kapazität der Streufeldkondensatoren (Ca,Cb) bezüglich der Bezugselektrode (Ec, 8), wobei diese Kapazitätsänderung in der Tertiärspule (Lc) eine Differenzspannung (Udiff) erzeugt, welche in der Anzeige- oder Meßeinrichtung (15) ausgewertet wird.

2. Sensor nach Anspruch 1, **dadurch gekennzeichnet, dass** der Transformator ein Differenztransformator (1) ist und die Bezugselektrode die Erde (8) darstellt und der Eingang (5) der Sekundärspule (Lb) auf die Systemmasse (18) gelegt ist.

3. Sensor nach Anspruch 1 oder 2, **dadurch gekennzeichnet, dass** der Signalgeber (14) ein Oszillator oder Impulsgeber mit einem festen Arbeitspunkt, zum Beispiel Rechteckgenerator oder Burstgenerator, ist.

4. Sensor nach einem der vorherigen Ansprüche, **dadurch gekennzeichnet, dass** die an die Primärspule (La) angeschlossene Kondensatorelektrode (Ea) (aktive Elektrode) eine mit Unterbrechungen versehene, nichtvollflächige Struktur aufweist.

5. Sensor nach Anspruch 4, **dadurch gekennzeichnet, dass** die an die Primärspule (La) angeschlossene Kondensatorelektrode (Ea) (aktive Elektrode) ein Gitter oder Netz (16) ist oder aus zusammenhängenden Streifen besteht.

6. Sensor nach einem der vorherigen Ansprüche, **dadurch gekennzeichnet, dass** das Wicklungsverhältnis von Primär- zu Sekundärspule (La,Lb) vorzugsweise 1 zu 1 beträgt bzw. dem Größenverhältniss der Elektroden angepaßt ist.

7. Sensor nach Anspruch 6, **dadurch gekennzeichnet, dass** das Wicklungsverhältnis von Tertiärspule (Lc) zu Primär- bzw. Sekundärspule (La,Lb) zwischen 1 bis 2000 zu 1 liegt.

8. Sensor nach Anspruch 1 oder 2, **dadurch gekennzeichnet, dass** die Anzeige- oder Meßeinrichtung (15) ein optisches oder akustisches Anzeigeelement aufweist.

9. Sensor nach einem der vorherigen Ansprüche, **dadurch gekennzeichnet, dass** die beiden Kondensatorelektroden (Ea,Eb) als flächige Elektroden sich gegenüberliegend bzw. -stehend angeordnet sind, und zur Bezugselektrode (Ec, 8), vorzugsweise die Erde, in einem vorgegebenen Winkel, vorzugsweise 90 Grad, angeordnet sind.

10. Sensor nach einem der vorherigen Ansprüche, **dadurch gekennzeichnet, dass** die Tertiärspule (Lc) von der Primär- und der Sekundärspule (La, Lb) kapazitiv getrennt ist.

11. Sensor nach Anspruch 3, **dadurch gekennzeichnet, dass** der Arbeitspunkt des Signalgebers (14) hinsichtlich der Amplitude, und/oder der Frequenz und/oder der Signalform fest vorgegeben ist.

12. Verwendung des elektrischen Sensors nach Anspruch 1 als Sicherheitseinrichtung zum Schutz oder zur Meldung des Vorhandenseins oder Nichtvorhandenseins eines Gegenstandes (19), wie Bild oder Skulptur oder Fahrzeug auf einem Parkplatz, gegen Diebstahl oder Zerstörung oder Anwesenheits- Abwesenheitsmeldung, wobei die an die Primärspule (La) angeschlossene Kondensatorelektrode (Ea) hinter das Bild oder unter die Skulptur (19) oder hinter oder unter dem Fahrzeug plaziert ist, so dass bei Annäherung einer Person oder eines Gegenstandes (12) auf das Bild oder auf die Skulptur (19) oder auf den Parkplatz zu und Unterschreiten eines vorgegebenen Sicherheitsabstandes die Änderung des elektrischen Streufeldes (10) zwischen Erde (8) und der aktiven Elektrode (Ea), eine in der Anzeige- oder Meßeinrichtung (15) auswertbare Spannungsänderung (Udiff) in der Tertiärspule (Lc) bewirkt.

13. Sicherheitseinrichtung nach Anspruch 12, **dadurch gekennzeichnet, dass** im Bereich eines Fahrzeugplatzes angeordneten, ein Dielektrikum darstellender Träger angeordnet ist, auf der dem Fahrzeug zugewandten Seite die aktive Kondensatorelektrode (Ea) aufgebracht und auf der gegenüber liegenden Seite des Trägers die zweite Kondensatorelektrode (Eb) angeordnet ist und der Tragboden für das Fahrzeug die Bezugselektrode, nämlich Erde (8), darstellt.

14. Sensor bzw. Sicherheitseinrichtung nach einem der vorherigen Ansprüche, **dadurch gekennzeichnet, dass** eine Mehrzahl von kapazitiven Sensorelektroden, jeweils bestehend aus den beiden Kondensatorelektroden sowie der Bezugselektrode, mittels eines Multiplexers angesteuert werden und nacheinander auswertbar sind.

## Claims

1. An electric sensor for measuring a capacitance change of a condenser (7) and conversion into a voltage signal (Udiff) that corresponds to the capacitance change and that is transmitted to a display or measuring device (15) and evaluated, using a transformer (1) with two bifilarly wound coils (La, Lb) on a core (2), whereby a signal generator (14) is connected to the input of the primary coil (La), especially for reporting a distance change of an object (12, 19) to be detected or to be monitored or to report the movement of two objects (12, 19) moving relative to each other,
**characterized by** the following features:
a) each one of the two condenser electrodes (Ea, Eb) of the condenser (7) is connected to the outputs (4, 6) of the primary (La) and secondary (Lb) coils, whereby said electrodes form an electric field (9) between them and there is a shared reference electrode (8, Ec) across from them which, for each of the condenser electrodes (Ea, Eb), additionally forms an electric stray field (10, 11), so that each condenser electrode (Ea, Eb) yields a stray field condenser (Ca, Cb) with the reference electrode (8, Ec),
b) the input (5) of the secondary coil (Lb) is connected to a fixed system reference potential (8),
c) on the core (2) of the transformer (1), there is a tertiary coil (Lc) to which the display or measuring device (15) is connected,
d) an object approaching the condenser electrodes (Ea, Eb) and the reference electrode (8, Ec) brings about a change in the capacitance of the stray field condensers (Ca, Cb) relative to the reference electrode (Ec, 8), whereby this capacitance change generates a differential mode voltage (Udiff) in the tertiary coil (Lc) and this voltage is evaluated in the display or measuring device (15).

2. The sensor according to Claim 1, **characterized in that** the transformer is a differential transformer (1) and the reference electrode is the ground (8) and the input (5) of the secondary coil (Lb) is connected to the system ground (18).

3. The sensor according to Claim 1 or 2, **characterized in that** the signal generator (14) is an oscillator or a pulse generator with a fixed working point, namely, in terms of amplitude and/or frequency and/or signal shape, for example, a rectangular-wave generator or a burst generator.

4. The sensor according to one of the preceding claims, **characterized in that** the condenser electrode (Ea) (active electrode), which is connected to the primary coil (La), has a structure that is provided with interruptions and that does not have a full surface.

5. The sensor according to Claim 4, **characterized in that** the condenser electrode (Ea) (active electrode), which is connected to the primary coil (La), can be a grid or a net 16 or else it can consist of cohesive strips.

6. The sensor according to one of the preceding claims, **characterized in that** the winding ratio of the primary coil to the secondary coil is preferably 1 to 1 or is adapted to the size ratio of the electrodes with respect to each other.

7. The sensor according to Claim 6, **characterized in that** the winding ratio of the tertiary coil (Lc) to the primary or secondary coil (La, Lb) is preferably between 1 and 2000 to 1.

8. The sensor according to Claim 1 or 2, **characterized in that** the display or measuring device (15) has an optical or acoustic display element.

9. The sensor according to one of the preceding claims, **characterized in that** the two condenser electrodes (Ea, Eb) are arranged as flat electrodes that lie or stand opposite from each other and they can be slanted at a prescribed angle, preferably 90 degrees, with respect to the reference electrode (Ec, 8), preferably the ground.

10. The sensor according to one of the preceding claims, **characterized in that** the tertiary coil (Lc) is capacitively separated from the primary coil and the secondary coil (La, Lb).

11. The sensor according to Claim 3, **characterized in that** the working point of the signal generator (14), in terms of amplitude and/or frequency and/or signal shape, is fixedly predefined.

12. The use of the electric sensor according to Claim 1 as a safety means to protect an object against theft or destruction or to report the presence or the absence of an object (19), such as a picture or a sculpture or a vehicle in a parking spot, whereby the condenser electrode (Ea), which is connected to the primary coil, is placed behind the picture or under the sculpture (19) or else behind or under the vehicle so that, when a person or an object (12) approaches the picture or the sculpture (19) or the parking spot and comes closer than a predefined safety distance, the change in the stray field (10) between the ground (8) and the active electrode (Ea), which is detected by the capacitive sensor, brings about a voltage change (Udiff) in the tertiary coil (Lc) that can be evaluated in the display or measuring device (15).

13. The safety means according to Claim 12, **characterized in that** a carrier representing a dielectric is situated in the area of a vehicle parking spot, the active condenser electrode (Ea) is arranged on the side facing the vehicle and the second condenser electrode (Eb) is situated on the opposite side of the carrier, whereby the load-bearing surface for the vehicle is the reference electrode, namely, the ground (8).

14. A sensor or safety means according to one of the preceding claims, **characterized in that** a plurality of capacitive sensor electrodes, each consisting of the two condenser electrodes as well as the reference electrode, can be actuated by means of a multiplexer and can then be evaluated consecutively.

## Revendications

1. Capteur électrique permettant la mesure d'un changement de capacité d'un condensateur (7) et la conversion en un signal de tension (Udiff) correspondant au changement de capacité, lequel signal est transmis à un dispositif d'indication ou de mesure (15) et évalué, ayant recours à un transformateur (1) comportant deux bobines à enroulements bifilaires (La, Lb) sur un noyau (2), un générateur de signaux (14) étant connecté à l'entrée de la bobine primaire (La), en particulier pour la signalisation d'une modification de distance d'un objet à détecter ou à surveiller (12, 19), ou pour la signalisation du mouvement de deux objets (12, 19) qui effectuent un mouvement relatif,
**caractérisé par** les attributs suivants :
a) sur les sorties (4, 6) des bobines primaire (La ) et secondaire (Lb) est connectée l'une des deux électrodes de condensateur respectives (Ea, Eb) du condensateur (7) qui forment entre elles un champ électrique (9) et en regard desquelles est placée une électrode de référence commune (8, Ec) qui forme par rapport à chacune des électrodes de condensateur (Ea, Eb) en plus, un champ de diffusion électrique (10, 11), de sorte que chaque électrode de condensateur (Ea, Eb) donne lieu conjointement avec l'électrode de référence (8, Ec) à un condensateur de champ de diffusion (Ca, Cb),
b) l'entrée (5) de la bobine secondaire (Lb) est appliquée à un potentiel de référence de système fixe (8),
c) sur le noyau (2) du transformateur (1) est disposée une bobine tertiaire (Lc) à laquelle est connecté le dispositif d'indication ou de mesure (15),
d) un objet (12, 19) qui se rapproche ou s'éloigne des électrodes de condensateur (Ea, Eb) et de l'électrode de référence (8, Ec) a pour effet une modification de la capacité des condensateurs du champ de diffusion (Ca, Cb) par rapport à l'électrode de référence (Ec, 8), le changement de capacité dans la bobine tertiaire (Lc) produisant une différence de tension (Udiff) qui est évaluée dans le dispositif d'indication ou de mesure (15).

2. Capteur selon la revendication 1, **caractérisé en ce que**
le transformateur est un transformateur différentiel (1) et que l'électrode de référence représente la terre (8), et que l'entrée (5) de la bobine secondaire (Lb) est mise à la masse du système (18).

3. Capteur selon la revendication 1 ou 2, **caractérisé en ce que**
le générateur de signaux (14) est un oscillateur ou un générateur d'impulsions avec un point de travail fixe, par exemple un générateur de rectangulaires ou un générateur de burst.

4. Capteur selon l'une des revendications précédentes, **caractérisé en ce que**
l'électrode de condensateur (Ea) (électrode active) connectée à la bobine primaire (La), présente une structure avec coupures qui ne constitue pas une surface en fond plein.

5. Capteur selon la revendication 4, **caractérisé en ce que**
l'électrode de condensateur (Ea) (électrode active) connectée à la bobine primaire (La) consiste en une grille ou un filet (16) ou en rubans formant une structure cohérente.

6. Capteur selon l'une des revendications précédentes, **caractérisé en ce que**
le rapport de bobinage entre la bobine primaire et la bobine secondaire (La, Lb) est de préférence de 1 à 1, en l'occurrence est adapté au rapport de grandeur des électrodes.

7. Capteur selon la revendication 6, **caractérisé en ce que**
le rapport de bobinage entre la bobine tertiaire (Lc) et la bobine primaire ou secondaire (La, Lb) se situe entre 1 jusqu'à 2000 à 1.

8. Capteur selon l'une des revendications 1 ou 2, **caractérisé en ce que**
le dispositif d'indication ou de mesure (15) fait état d'un élément témoin optique ou acoustique.

9. Capteur selon l'une des revendications précédentes, **caractérisé en ce que**
les deux électrodes de condensateur (Ea, Eb) sont disposées en tant qu'électrodes planes opposées l'une à l'autre à l'horizontale ou à la verticale et sont disposées en formant par rapport à l'électrode de référence (Ec, 8), de préférence la terre, un angle prédéfini, de préférence de 90 degrés.

10. Capteur selon l'une des revendications précédentes, **caractérisé en ce que**
la bobine (Lc) est capacitivement séparée de la bobine primaire et secondaire (La, Lb).

11. Capteur selon la revendication 3, **caractérisé en ce que**
le point de travail du générateur de signaux (14) est prédéfini en ce qui concerne l'amplitude, et/ou la fréquence et/ou la forme du signal.

12. Utilisation du capteur électrique selon la revendication 1 en tant que dispositif de sécurité destiné à la protection ou la signalisation de la présence ou de la non présence d'un objet (19) tel qu'un tableau ou une sculpture ou un véhicule sur un parking, mettant à l'abri du vol ou des ravages ou servant à avertir de la présence ou de l'absence, l'électrode de condensateur (Ea) connectée à la bobine primaire (La) étant placée derrière le tableau ou au-dessous de la sculpture (19) ou derrière ou au-dessous du véhicule, si bien que dans le cas de l'approche d'une personne ou d'un objet (12) en direction du tableau ou de la sculpture (19) ou du parking et de franchissement d'un écart de sécurité prédéfini, la modification du champ de diffusion électrique (10) entre la terre (8) et l'électrode active (Ea) a pour effet une modification de la tension (Udiff) dans la bobine tertiaire (Lc) qui peut être évaluée dans le dispositif d'indication ou de mesure (15).

13. Dispositif de sécurité selon la revendication 12, **caractérisé en ce que**
à proximité d'un véhicule, un diélectrique est disposé représentant un support, l'électrode de condensateur active (Ea) est mise en place sur le côté tourné vers le véhicule et la deuxième électrode de condensateur (Eb) est disposée sur le côté opposé du support, et le fond porteur pour le véhicule représente l'électrode de référence, à savoir la terre (8).

14. Capteur ou dispositif de sécurité selon l'une des revendications précédentes,
**caractérisé en ce que**
une pluralité d'électrodes de capteurs capacitives consistant chacune en les deux électrodes de condensateur, ainsi qu'en l'électrode de référence, sont activées au moyen d'un multiplexeur et peuvent être évaluées les unes après les autres.
